# NEUE EUROPÄISCHE PATENTSCHRIFT

(11) **EP 1 188 096 B2**
(45) Veröffentlichungstag und Bekanntmachung des Hinweises auf die Entscheidung über den Einspruch: **08.04.2015**
(45) Hinweis auf die Patenterteilung: 09.04.2003
(21) Anmeldenummer: 00951288.0
(22) Anmeldetag: 21.06.2000
(51) Int. Cl.: G05B 19/05

(54) **STEUERUNGSSYSTEM ZUM STEUERN VON SICHERHEITSKRITISCHEN PROZESSEN**
CONTROL SYSTEM FOR CONTROLLING SECURITY-CRITICAL PROCESSES
SYSTEME DE COMMANDE POUR COMMANDER DES PROCESSUS CRITIQUES POUR LA SECURITE

(30) Priorität: 22.06.1999 DE 19928517
(43) Veröffentlichungstag der Anmeldung: 20.03.2002
(73) Patentinhaber: Pilz GmbH & Co.., 73760 Ostfildern (DE)
(72) Erfinder: HECKEL, Andreas, D-73630 Remshalden (DE); WOHNHAAS, Klaus, D-70736 Fellbach (DE); RUPP, Roland, D-73110 Hattenhofen (DE)
(74) Vertreter: Duhme, Torsten
(86) Internationale Anmeldenummer: PCT/EP2000/005763
(87) Internationale Veröffentlichungsnummer: WO 2000/079353

(56) Entgegenhaltungen:
- EP-A- 0 601 216
- EP-A- 0 905 594
- EP-A1- 0 905 594
- EP-A2- 1 054 309
- WO-A2-00/79352
- DE-A- 19 612 423
- DE-A- 19 736 581
- DE-U- 29 718 102
- DIN EN 954-1
- Applikations-Handbuch "Safety Integrated"
- "Profibus-DP/DA, ProfiSafe, Profil für Sicherheitstechnik, prVI.0"
- Auszug aus dem Siemenskatalog "Siemens ST 50 1998", SIMATIC
- Fail Safe with PROFIBUS, Revision 1.0.
- "AS-Interface goes Safety" von Dr. Otto "IEE Automatisierung + Datentechnik" 04/1999

## Beschreibung

Die vorliegende Erfindung betrifft ein Steuerungssystem zum Steuern von sicherheitskritischen Prozessen, mit einer ersten Steuereinheit zum Steuern eines sicherheitskritischen Prozesses und mit einer Signaleinheit, die über E/A-Kanäle mit dem sicherheitskritischen Prozeß verknüpft ist, ferner mit einem Feldbus, über den die erste Steuereinheit und die Signaleinheit verbunden sind, und mit einem Busmaster zum Steuern der Kommunikation auf dem Feldbus, wobei die erste Steuereinheit und die Signaleinheit sicherheitsbezogene Einrichtungen aufweisen, um eine fehlersichere Kommunikation miteinander zu gewährleisten.

Ein derartiges Steuerungssystem ist aus der DE-A-197 42 716 bekannt.

In der Steuer- und Automatisierungstechnik ist die Verwendung von Feldbussen zur Datenkommunikation zwischen einzelnen, an der Steuerung eines Prozesses beteiligten Einheiten bereits hinreichend bekannt. Unter einem Feldbus versteht man dabei ein System zur Datenkommunikation, an das im Idealfall beliebige Einheiten angeschlossen werden können, die über den gemeinsamen Feldbus miteinander kommunizieren. Die Kommunikation der Einheiten erfolgt auf dem Feldbus anhand von spezifizierten Protokollen. Ein derartiges Kommunikationssystem steht im Gegensatz zu einer individuellen Punkt-zu-Punkt-Kommunikationsverbindung zwischen jeweils zwei Einheiten, von deren Kommunikation miteinander andere Einheiten vollständig abgetrennt sind. Beispiele für bekannte Feldbusse sind der sogenannte CAN-Bus, der sogenannte Profibus oder der sogenannte Interbus.

Bei vielen Feldbussen wird die Kommunikation von zumindest einem Busmaster gesteuert, der den übrigen an den Feldbus angeschlossenen Einheiten, den sogenannten Busteilnehmern, übergeordnet ist. Dies hat zur Folge, daß ein Busteilnehmer ohne "Erlaubnis" des Busmasters keine Daten an andere Busteilnehmer senden kann. In der Regel ist der Busmaster ein Standardbaustein, der die für den Feldbus spezifizierten Protokolle gewährleisten muß und der häufig recht komplex und damit vergleichsweise teuer ist.

Obwohl die Verwendung von Feldbussen zahlreiche Vorteile vor allem in Hinblick auf den ansonsten erforderlichen, hohen Verkabelungsaufwand besitzt, war ihre Verwendung im praktischen Einsatz zur Steuerung von sicherheitskritischen Prozessen bisher nicht möglich. Grund hierfür ist, daß die Feldbusse angesichts ihrer für beliebige Einheiten frei zugänglichen Struktur die zur Steuerung sicherheitskritischer Prozesse erforderliche Fehlersicherheit nicht gewährleisten konnten.

Unter einem sicherheitskritischen Prozeß wird vorliegend ein Prozeß verstanden, von dem bei Auftreten eines Fehlers eine nicht zu vernachlässigende Gefahr für Menschen oder auch materielle Güter ausgeht. Bei einem sicherheitskritischen Prozeß muß daher mit im Idealfall 100%iger Sicherheit gewährleistet sein, daß der Prozeß bei Vorliegen eines Fehlers in einen sicheren Zustand überführt wird. Derartige sicherheitskritische Prozesse können auch Teilprozesse von größeren, übergeordneten Gesamtprozessen sein. Beispiele für sicherheitskritische Prozesse sind chemische Verfahren, bei denen kritische Parameter unbedingt in einem vorgegebenen Bereich gehalten werden müssen oder auch komplexe Maschinensteuerungen, wie etwa die einer hydraulischen Presse oder einer gesamten Fertigungsstraße. Bei einer hydraulischen Presse kann beispielsweise die Materialzuführung ein sicherheitsunkritischer Teilprozeß, das Inbetriebnehmen des Preßwerkzeugs demgegenüber ein sicherheitskritischer Teilprozeß im Rahmen des Gesamtprozesses sein. Weitere Beispiele für sicherheitskritische (Teil-) Prozesse sind die Überwachung von Schutzgittern, Schutztüren oder Lichtschranken, die Steuerung von 2-Hand-Schaltern oder auch die Reaktion auf Not-Aus-Schalter.

In der eingangs genannten DE-A-197 42 716 ist eine Steuer- und Datenübertragungsanlage beschrieben, die auf einem Feldbus, insbesondere dem Interbus, basiert und der die Aufgabe zugrunde lag, auch sicherheitsbezogene Baugruppen integrieren zu können. Zur Lösung dieser Aufgabe wurde vorgeschlagen, sowohl in dem Busmaster, in der genannten Schrift als Master-Steuereinrichtung bezeichnet, als auch in den Busteilnehmern jeweils sicherheitsbezogene Einrichtungen anzuordnen. Die sicherheitsbezogenen Einrichtungen führen dann zusätzlich zur eigentlichen Datenkommunikation Sicherheitsfunktionen aus, die die erforderliche Fehlersicherheit im Hinblick auf die Steuerung von sicherheitskritischen Prozessen gewährleisten. Anschaulich gesprochen wird die erforderliche Sicherheit hierbei also vor allem dadurch erreicht, daß der Busmaster durch die sicherheitsbezogenen Einrichtungen "sicher" gemacht wird.

Eine derartige Maßnahme ist bei der Entwicklung und beim Aufbau eines fehlersicheren Steuerungssystems jedoch sehr aufwendig und kostenintensiv, da hierbei der komplexe Busmaster selbst modifiziert werden muß und nicht auf Standardbausteine zurückgegriffen werden kann.

Darüber hinaus ist eine derartige Maßnahme auch im Betrieb eines darauf basierten Steuerungssystems nachteilig, da die sicherheitsrelevante Kommunikation bei der Steuerung von komplexen Prozessen in der Regel nur etwa bis zu 10 % der gesamten Kommunikation ausmacht. Die genannte Maßnahme besitzt somit den Nachteil, daß mit hohem Aufwand der Busmaster "sicher" gemacht wird, obwohl dies für 90 % und mehr der von ihm gesteuerten Kommunikation gar nicht erforderlich ist.

Es ist daher Aufgabe der vorliegenden Erfindung, ein Steuerungssystem der eingangs genannten Art anzugeben, das eine fehlersichere Kommunikation der an einem sicherheitskritischen Prozeß beteiligten Einheiten gewährleistet, wobei gleichzeitig die Verwendung von Standardbausteinen als Busmaster möglich ist.

Diese Aufgabe wird bei dem eingangs genannten Steuerungssystem dadurch gelöst, daß der Busmaster getrennt von der ersten Steuereinheit und der Signaleinheit an den Feldbus angeschlossen ist.

Die erste Steuereinheit ist aufgrund der sicherheitsbezogenen Einrichtungen eine "sichere" Steuereinheit, d.h. sie ist in der Lage, interne und auch externe Fehler, ggf. im Zusammenspiel mit anderen sicheren Einheiten, festzustellen und zu korrigieren. Anschaulich gesprochen bedeutet die genannte Maßnahme, daß die erste Steuereinheit zum Steuern sicherheitskritischer Prozesse einerseits und der Busmaster andererseits in voneinander getrennten Bausteinen untergebracht und an den verwendeten Feldbus angeschlossen sind. Dabei ist es möglich, die erste Steuereinheit als einfachen Busteilnehmer, d.h. ohne eine Busmasterfunktionalität an den Feldbus anzuschließen, wie nachfolgend am Beispiel des Interbusses erläutert wird. Die Steuerung des sicherheitskritischen Prozesses kann dann weitgehend unabhängig von der Steuerung sicherheitsunkritischer Prozesse und auch unabhängig von der Steuerung der Datenkommunikation auf einem gemeinsamen Feldbus stattfinden.

Die erste Steuereinheit benötigt somit zumindest grundsätzlich keine Busmaster-Funktionalität und umgekehrt kann der Busmaster frei von sicherheitsbezogenen Einrichtungen an den Feldbus angeschlossen werden. Hierdurch ist die Verwendung von herkömmlichen Standard-Busmastern möglich. Die genannte Aufgabe ist somit vollständig gelöst.

Die erfindungsgemäße Maßnahme besitzt zudem den Vorteil, daß die erste Steuereinheit und mit ihr die sicherheitsbezogenen Einrichtungen hinsichtlich ihrer Komplexität und Geschwindigkeit an den nur vergleichsweise geringen sicherheitsrelevanten Datenverkehr angepaßt sein müssen. Der bei einem komplexen Gesamtprozeß bis zu mehr als 90 % betragende, nicht-sicherheitsrelevante Datenverkehr muß nicht über die erste Steuereinheit und auch nicht über die sicherheitsbezogenen Einrichtungen abgewickelt werden. Die erste Steuereinheit und die sicherheitsbezogenen Einrichtungen können daher vergleichsweise einfach aufgebaut sein.

In einer Ausgestaltung der zuvor genannten Maßnahme weist die erste Steuereinheit ein eigenständiges Steuerprogramm zum Steuern des sicherheitskritischen Prozesses auf.

Unter einem eigenständigen Steuerprogramm wird dabei ein Steuerprogramm verstanden, das die erste Steuereinheit in die Lage versetzt, den sicherheitskritischen Prozeß unabhängig von anderen Steuereinheiten zu steuern. Die erste Steuereinheit ist somit nicht nur ein redundantes Element in Ergänzung zu einer weiteren Steuereinheit, sondern sie ist in der Lage, den sicherheitskritischen Prozeß eigenständig fehlersicher zu steuern. Die Maßnahme ist besonders vorteilhaft, da hierdurch eine vollständige Trennung der sicherheitsrelevanten Teile des Steuerungssystems von den nicht-sicherheitsrelevanten Teilen erreicht ist. Dies ist insbesondere im Hinblick auf die Zulassung eines Steuerungssystems durch verantwortliche Aufsichtsbehörden von Bedeutung, da hierdurch eine Beeinflussung des sicherheitsrelevanten Teils durch einen Eingriff im nicht-sicherheitsrelevanten Teil vermieden ist.

In einer weiteren Ausgestaltung ist die erste Steuereinheit geeignet, ein fehlersicheres Bustelegramm zu erzeugen, bei dessen Empfang die Signaleinheit den sicherheitskritischen Prozeß in einen sicheren Zustand überführt.

Wenn es sich bei dem sicherheitskritischen Prozeß beispielsweise um die Überwachung eines Not-Aus-Schalters handelt, kann ein sicherer Zustand darin bestehen, den Gesamtprozeß umgehend stromlos zu schalten. Bei einer chemischen Produktionsanlage kann ein vollständiges Abschalten jedoch unter Umständen unkontrollierte Reaktionen ermöglichen, so daß in diesem Fall ein sicherer Zustand durch das Ansteuern vorgegebener Parameterbereiche definiert ist. Die genannte Maßnahme steht im Gegensatz dazu, das Überführen des Prozesses in einen sicheren Zustand durch zusätzliche, von dem Feldbus getrennte Steuerleitungen zu realisieren. Dies wurde bisher bevorzugt, da ein fehlersicheres Bustelegramm nur in Verbindung mit sicherheitsbezogenen Einrichtungen möglich ist. Die genannte Maßnahme besitzt demgegenüber den Vorteil, daß auf die entsprechenden zusätzlichen Steuerleitungen verzichtet werden kann, wodurch der Verkabelungsaufwand nochmals reduziert wird.

In einer weiteren Ausgestaltung weisen die sicherheitsbezogenen Einrichtungen eine mehrkanalige Struktur auf.

Mehrkanalige Struktur bedeutet hier, daß die sicherheitsbezogenen Einrichtungen zumindest zwei parallele Verarbeitungskanäle aufweisen, die zueinander redundant sind. Die Maßnahme besitzt den Vorteil, daß ein Fehler in einem der Verarbeitungskanäle bspw. anhand eines Ergebnisses, das von demjenigen des oder der anderen Verarbeitungskanäle abweicht, erkannt und ggf. korrigiert werden kann. Die Maßnahme trägt somit in sehr zuverlässiger Weise zur Verbesserung der Fehlersicherheit bei.

Bevorzugt ist die mehrkanalige Struktur diversitär.

Dies bedeutet, daß die einzelnen Kanäle der mehrkanaligen Struktur unterschiedlich aufgebaut sind. Beispielsweise kann ein Kanal auf einem Mikrocontroller eines ersten Herstellers und ein anderer Kanal auf einem Mikrocontroller eines zweiten Herstellers basieren. Dementsprechend sind in einem solchen Fall auch die Steuerprogramme der Mikrocontroller voneinander verschieden. Alternativ kann einer der Kanäle anstelle eines Mikrocontrollers eine festverdrahtete Logik aufweisen. Die genannte Maßnahme besitzt den Vorteil, daß die Fehlersicherheit nochmals beträchtlich erhöht ist, da die Wahrscheinlichkeit für das gleichzeitige Auftreten von gleichen Fehlern in diversitären Strukturen gegenüber homogenen Strukturen nochmals wesentlich reduziert ist.

In einer weiteren Ausgestaltung der Erfindung weist das Steuerungssystem eine zweite Steuereinheit zum Steuern von sicherheitsunkritischen Prozessen auf.

Die zweite Steuereinheit ist bevorzugt eine Standard-Steuereinheit, d.h. eine als Standardbaustein erhältliche Steuereinheit. Diese Maßnahme ist besonders vorteilhaft, wenn das Steuerungssystem zum Steuern komplexer Gesamtprozesse eingesetzt werden soll, da in diesem Fall sämtliche sicherheitsunkritischen Teilprozesse getrennt von den sicherheitskritischen Teilprozessen gesteuert werden können. Zudem kann die erste Steuereinheit auf diese Weise von nicht-sicherheitsrelevanten Aufgaben entlastet werden. Hierdurch ist es möglich, die erste Steuereinheit und darüber hinaus das gesamte Steuerungssystem besonders kostengünstig und leistungseffizient auszulegen.

In einer weiteren Ausgestaltung der zuvor genannten Maßnahme ist die zweite Steuereinheit getrennt von der ersten Steuereinheit an den Feldbus angeschlossen.

Diese Maßnahme besitzt den Vorteil, daß die Trennung der sicherheitsrelevanten und nicht-sicherheitsrelevanten Prozesse noch konsequenter vollzogen ist, was eine unbeabsichtigte Beeinflussung der sicherheitsrelevanten Steuerungen nochmals verringert. Zudem ist es hierdurch möglich, eine erste Steuereinheit zum Steuern sicherheitskritischer Prozesse in einer bereits existierenden Gesamtanlage nachzurüsten, ohne die bereits zuvor in diesem Steuerungssystem verwendete Standard-Steuereinheit auszutauschen. Dies erlaubt eine einfache und kostengünstige Nachrüstung bereits existierender Steuerungssysteme mit sicherheitsrelevanten Komponenten.

In einer weiteren Ausgestaltung der zuvor genannten Maßnahmen ist die zweite Steuereinheit frei von sicherheitsbezogenen Einrichtungen.

Dies bedeutet, daß die zweite Steuereinheit keine sicherheitsbezogenen Einrichtungen aufweist. Die Maßnahme besitzt den Vorteil, daß auch die zweite Steuereinheit von unnötigem Ballast freigehalten ist. Hierdurch ist es möglich, für die zweite Steuereinheit kostengünstige Standardbauelemente einzusetzen.

In einer weiteren Ausgestaltung der zuvor genannten Maßnahmen beinhaltet die zweite Steuereinheit den Busmaster.

Diese Maßnahme besitzt den Vorteil, daß hierdurch die Anzahl der an den verwendeten Feldbus angeschlossenen Einheiten reduziert ist. Zudem sind Steuereinheiten mit integriertem Busmaster von verschiedenen Herstellern als Standardbauelemente erhältlich. Die genannte Maßnahme ist somit kostengünstig und effizient realisierbar.

In einer weiteren Ausgestaltung der Erfindung stellt der Feldbus einen umlaufenden Telegrammverkehr zwischen einzelnen an den Feldbus angeschlossenen Einheiten bereit. Vorzugsweise ist der Feldbus dabei ein Interbus.

Feldbusse mit einem umlaufenden Telegrammverkehr sind im Stand der Technik an sich bekannt. Ein Beispiel hierfür ist der bevorzugt verwendete Interbus. Derartige Feldbusse sind im Prinzip wie ein Schieberegister aufgebaut, dessen sequentiell nacheinander angeordnete Speicherplätze die an den Feldbus angeschlossenen Einheiten sind. Unter Steuerung des Busmasters wird ein Datenwort sequentiell von einer Einheit zur nächsten weitergeschoben. Aufgrund geeigneter Maßnahmen, die bei verschiedenen Feldbussen unterschiedlich sein können, erkennt eine angeschlossene Einheit, daß ein weitergeschobenes Bustelegramm für sie bestimmte Anteile enthält.

Die genannte Maßnahme besitzt den Vorteil, daß sich hierdurch auf einfache Weise sehr effiziente Steuerungssysteme mit einem sehr geringen Verkabelungsaufwand implementieren lassen. Die Verwendung eines Interbusses als Feldbus besitzt zudem den Vorteil, daß eine Einheit die für sie bestimmten Bustelegramme auf besonders einfache Weise identifizieren kann. Dies ist zudem wenig fehleranfällig.

In einer weiteren Ausgestaltung der Erfindung ist die erste Steuereinheit bezogen auf eine Umlaufrichtung des Telegrammverkehrs vor der Signaleinheit angeordnet.

Diese Maßnahme ist besonders vorteilhaft, da hierdurch auf einfache Weise gewährleistet ist, daß die Signaleinheit nur Daten erhält, die durch die erste Steuereinheit erzeugt worden sind.

In einer weiteren Ausgestaltung der zuvor genannten Maßnahme weist die erste Steuereinheit Mittel auf, um Telegrammdaten, die an die Signaleinheit adressiert sind, durch fehlersichere Telegrammdaten zu ersetzen.

Die genannte Maßnahme ist eine sehr einfache und damit vorteilhafte Möglichkeit, um zu gewährleisten, daß die mit einem sicherheitskritischen Prozeß verbundene Signaleinheit ausschließlich fehlersichere Telegrammdaten erhält. Anschaulich gesprochen macht man sich hierbei den sequentiell umlaufenden Telegrammverkehr dahingehend zunutze, daß ein Telegramm die genannte Signaleinheit nur dann erreichen kann, wenn es von der ersten Steuereinheit erzeugt worden ist.

In einer weiteren Ausgestaltung der Erfindung weist das Steuerungssystem zumindest zwei erste Steuereinheiten zum Steuern von zumindest zwei sicherheitskritischen Prozessen auf.

Diese Maßnahme bietet die Möglichkeit, auf sehr einfache und kostengünstige Weise sehr komplexe Gesamtprozesse mit verschiedenen sicherheitskritischen Teilprozessen individuell und unabhängig voneinander zu steuern. Dabei macht sich als besonderer Vorteil bemerkbar, daß keine der ersten Steuereinheiten eine Busmasterfunktionalität aufweisen muß, was die Kosten des Gesamtsystems niedrig hält.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels der Erfindung, wobei als Feldbus ein Interbus zum Einsatz kommt,
- Fig. 2: eine schematische Darstellung eines Kommunikationsbausteins, mit dem die erste Steuereinheit in dem in Fig. 1 gezeigten Ausführungsbeispiel an den Interbus angeschlossen ist,
- Fig. 3: eine schematische Darstellung eines Empfangsbausteins, den die erste Steuereinheit in dem gezeigten Ausführungsbeispiel zusätzlich besitzt,
- Fig. 4: eine schematische Darstellung eines Bustelegramms beim Interbus und
- Fig. 5: eine schematische Darstellung, wie sicherheitsrelevante Datenrahmen bei dem Bustelegramm gemäß Fig. 4 durch fehlersichere Telegrammdaten ersetzt werden.

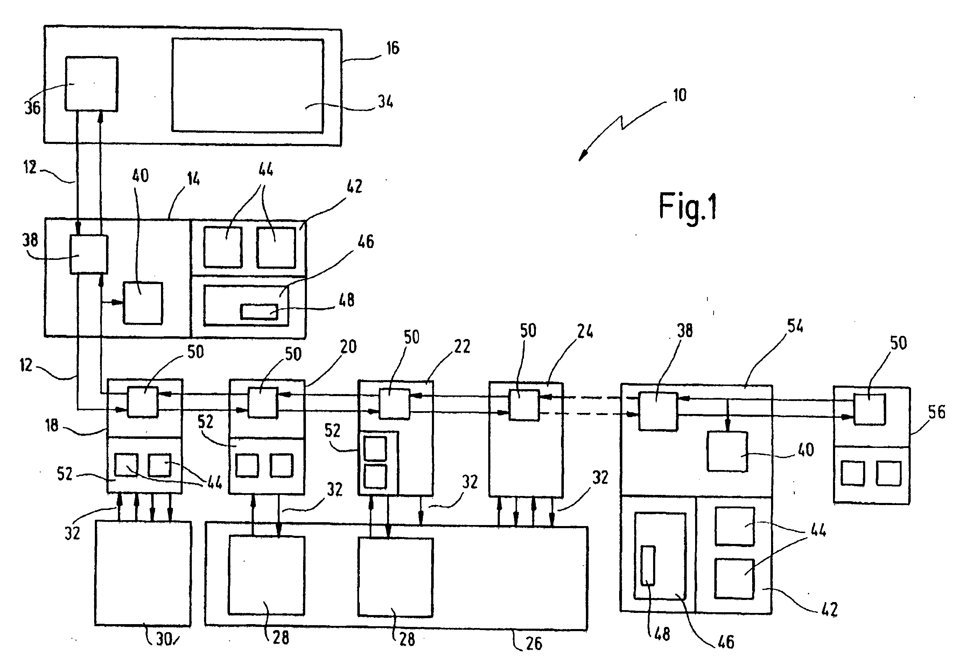

In Fig. 1 ist ein erfindungsgemäßes Steuerungssystem in seiner Gesamtheit mit der Bezugsziffer 10 bezeichnet.

Das Steuerungssystem 10 basiert auf einem Feldbus 12, der im vorliegenden Fall ein Interbus ist. An den Feldbus 12 sind eine erste Steuereinheit 14, eine zweite Steuereinheit 16 sowie insgesamt vier beispielhaft dargestellte Signaleinheiten 18, 20, 22 und 24 angeschlossen. Die erste Steuereinheit 14 ist eine sichere Steuereinheit, während die zweite Steuereinheit 16 eine Standar-Steuereinheit ist.

Mit der Bezugsziffer 26 ist ein automatisierter Gesamtprozeß bezeichnet, der zwei beispielhaft dargestellte sicherheitskritische Teilprozesse 28 beinhaltet. Die außerhalb der sicherheitskritischen Teilprozesse 28 liegenden Anteile des Gesamtprozesses 26 sind nicht sicherheitskritisch, d.h. sie erfordern keine sicherheitsbezogenen Zusatzmaßnahmen. Beispielhaft handelt es sich bei dem Gesamtprozeß 26 um die automatisierte Steuerung einer Presse, bei der sicherheitsunkritische Teilprozesse u.a. die Materialzuführung der zu verarbeitenden Teile (nicht dargestellt) sind. Die sicherheitskritischen Teilprozesse 28 betreffen hier beispielsweise die Steuerung und Überwachung eines Zweihand-Schalters und eines Schutzgitters.

Mit der Bezugsziffer 30 ist ein Prozeß bezeichnet, der insgesamt sicherheitskritisch ist, wie etwa die Überwachung eines Not-Aus-Schalters.

Die Steuereinheiten 18 bis 24 sind über E/A-Kanäle (Eingabe-/Ausgabe-Kanäle) 32 mit den zu steuernden Prozessen 26 bis 30 verbunden. Die E/A-Kanäle 32 stellen Eingänge und Ausgänge bereit, über die Zustandssignale, die für die zu steuernden Prozesse charakteristisch sind, eingelesen werden können und über die Steuersignale zum Steuern der Prozesse ausgegeben werden können. In der Praxis sind an die E/A-Kanäle 32 hier nicht dargestellte Sensoren bzw. Aktoren angeschlossen.

Die zweite Steuereinheit 16 weist neben anderen, an sich bekannten Komponenten einen Mikrocontroller 34 sowie einen Master-Protokollchip 36 auf. Der Master-Protokollchip 36 besitzt im vorliegenden Fall eine Busmasterfunktionalität für einen Interbus und wird im folgenden auch als Busmaster bezeichnet. Derartige Master-Protokollchips sind als Standardbauelemente von verschiedenen Herstellern erhältlich.

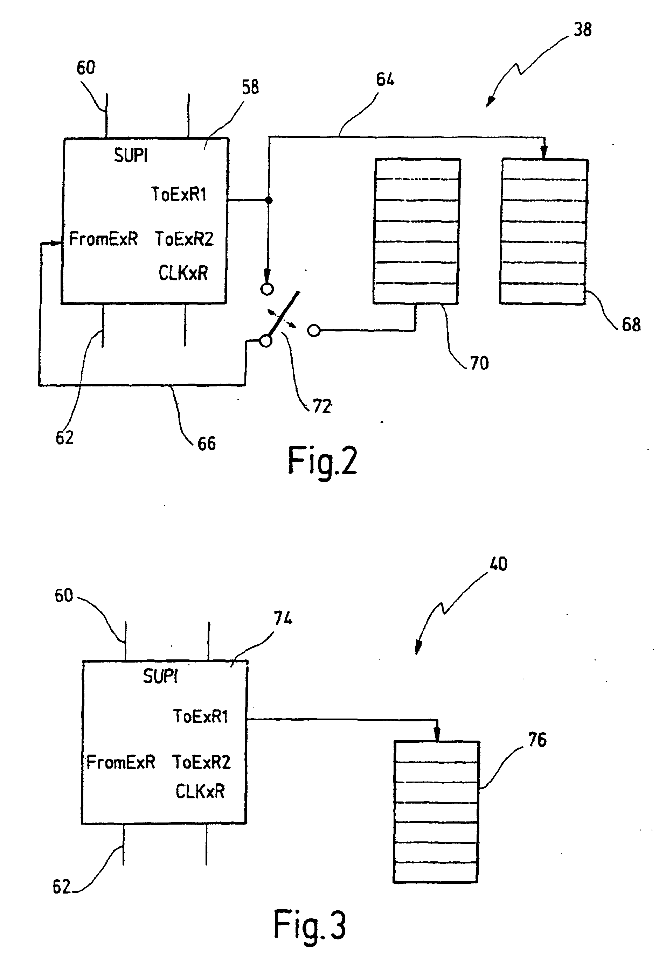

Die erste Steuereinheit 14 ist über einen Kommunikationsbaustein 38, dessen Aufbau anhand Fig. 2 nachfolgend näher beschrieben wird, als Busteilnehmer an den Feldbus 12 angeschlossen. Darüber hinaus besitzt die erste Steuereinheit 14 im vorliegenden Fall noch einen Empfangsbaustein 40, der am zurücklaufenden Signalpfad des Feldbusses 12 angeschlossen ist.

Die erste Steuereinheit 14 besitzt des weiteren eine sicherheitsbezogene Einrichtung 42, die im vorliegenden Fall ein mehrkanaliges, diversitäres Mikrocontrollersystem beinhaltet. Das mehrkanalige Mikrocontrollersystem ist hier anhand von zwei redundanten Mikrocontrollern 44 angedeutet, die von verschiedenen Herstellern stammen und daher eine unterschiedliche Programmierung erfordern. Die sicherheitsbezogene Einrichtung 42 implementiert Fehlerbeherrschungsmaßnahmen, die in Verbindung mit den nachfolgend beschriebenen sicherheitsbezogenen Einrichtungen in den Signaleinheiten 18 bis 22 eine fehlersichere Datenkommunikation ermöglichen. Mögliche Fehlerbeherrschungsmaßnahmen sind beispielsweise in einem Artikel mit dem Titel "Bus-Software mit Feuermelder", erschienen in der Zeitschrift "iee", 43. Jahrgang, 1998, Nr. 8, Seiten 46 - 48 beschrieben.

Ferner besitzt die erste Steuereinheit 14 einen Speicher 46, in dem ein Steuerprogramm 48 abgelegt ist. Das Steuerprogramm 48 ist insofern eigenständig, als daß die erste Steuereinheit 14 damit in der Lage ist, den sicherheitskritischen Prozeß 30 sowie die sicherheitskritischen Teilprozesse 28 unabhängig von der zweiten Steuereinheit 16 (mit Ausnahme der durch den Busmaster 36 gesteuerten Kommunikation auf dem Feldbus 12) zu steuern.

Die Signaleinheiten 18 bis 24 sind jeweils über einen Slave-Protollchip 50 als Busteilnehmer an den Feldbus 12 angeschlossen. Der Slave-Protokollchip 50 ist ebenfalls ein Standardbauelement, das von verschiedenen Herstellern erhältlich ist. Zudem weisen die Signaleinheiten 18, 20 und 22 jeweils sicherheitsbezogene Einrichtungen 52 auf, die wiederum ein zweikanaliges Mikrocontrollersystem 44 beinhalten. Die Signaleinheiten 18 und 20 sind dabei beispielhaft so dargestellt, daß sämtliche über sie laufenden Signale unter Zuhilfenahme der sicherheitsbezogenen Einrichtungen 52 abgewickelt werden. Die Signaleinheiten 18 und 20 sind somit insgesamt "sichere" Signaleinheiten. Die Signaleinheit 22 ist nur zum Teil eine "sichere" Signaleinheit, d.h. nur ein Teil der hierüber abgewickelten Signale unterliegt einer Steuerung und Kontrolle durch die sicherheitsbezogenen Einrichtungen 52. Die Signaleinheit 24 besitzt demgegenüber keine sicherheitsbezogenen Einrichtungen und ist von daher eine "nicht-sichere" Standard-Signaleinheit.

Die Signaleinheit 18 ist mit dem sicherheitskritischen Prozeß 30 und die Signaleinheit 20 mit einem der sicherheitskritischen Teilprozesse 28 verbunden. Diese genannten Prozesse werden ausschließlich und eigenständig von der ersten Steuereinheit 14 gesteuert. Die Signaleinheit 22 ist mit ihrem sicheren Anteil mit dem zweiten sicherheitskritischen Teilprozeß 28 verbunden, während sie mit ihrem nicht-sicheren Anteil ein Steuersignal für den im übrigen sicherheitsunkritischen Gesamtprozeß 26 erzeugt. Die Signaleinheit 22 wird dementsprechend in ihrem sicheren Teil durch die erste Steuereinheit 14 und in ihrem nicht-sicheren Teil durch die zweite Steuereinheit 16 gesteuert. Hierdurch ist es somit möglich, eine sichere und eine nicht-sichere Signaleinheit unter ein und derselben Busadresse anzusprechen.

Die Signaleinheit 24 ist ausschließlich mit sicherheitsunkritischen Anteilen des Gesamtprozesses 26 verbunden und wird ausschließlich von der zweiten Steuereinheit 16 angesprochen.

Abweichend von dieser Ausführung ist es grundsätzlich jedoch möglich, auch die Standard-Signaleinheit 24 über die erste Steuereinheit 14 anzusteuern, wobei jedoch in diesem Fall keine vollständig fehlersichere Kommunikation gewährleistet ist.

Mit der Bezugsziffer 54 ist eine weitere sichere Steuereinheit bezeichnet, die in ihrem Aufbau und ihrer Funktion der ersten Steuereinheit 14 entspricht. Mit der Bezugsziffer 56 ist eine weitere sichere Signaleinheit bezeichnet. Die weitere erste Steuereinheit 54 sowie die sichere Signaleinheit 56 können zusätzlich zu den zuvor beschriebenen Einheiten an dem Feldbus 12 angeschlossen sein, was durch eine unterbrochene Linie dargestellt ist. Für die nachfolgende Erläuterung der Funktionsweise des erfindungsgemäßen Steuerungssystems 10 wird jedoch der Einfachheit halber angenommen, daß die weitere sichere Steuereinheit 54 sowie die sichere Signaleinheit 56 nicht am Feldbus 12 angeschlossen sind.

Der in der ersten Steuereinheit 14 enthaltene und in Fig. 2 näher dargestellte Kommunikationsbaustein 38 besitzt einen Slave-Protokollchip 58, der über einen ersten Busanschluß 60 eingangsseitig und über einen zweiten Busanschluß 62 ausgangsseitig mit dem Feldbus 12 verbunden ist. Der Protokollchip 58 entspricht den in den Signaleinheiten 18 bis 24 enthaltenen Protokollchips 50 und wird im Fall des hier angenommenen Interbusses häufig als "Serielles Mikroprozessor Interface" (SUPI) bezeichnet.

Der Protokollchip 58 besitzt darüber hinaus weitere Ein- und Ausgänge, von denen hier beispielhaft ein Eingang FromExR (From External Receiver), zwei Eingänge ToExR1 bzw. ToExR2 (To External Receiver) sowie ein Taktausgang CLKxR angedeutet sind. Am Ausgang ToExR1 ist eine Signalleitung 64 und am Eingang FromExR ist eine Signalleitung 66 angeschlossen. Die Signalleitung 64 verbindet den Protokollchip 58 mit einem Empfangsspeicher 68. Darüber hinaus besitzt der Kommunikationsbaustein 38 auch einen Sendespeicher 70. Die Signalleitung 66 verbindet den Eingang FromExR des Protokollchips 58 über ein als Schalter 72 dargestelltes Mittel wahlweise mit dem Ausgang ToExR1 bzw. mit dem Sendespeicher 70. Die Funktionsweise des Kommunikationsbausteins 38 ist nun wie folgt:

Der Protokollbaustein 58 empfängt an seinem Busanschluß 60 ein vom Busmaster 36 auf den Feldbus 12 gelegtes Bustelegramm. Die darin enthaltenen Daten werden dann am Ausgang ToExR1 bereitgestellt und über die Signalleitung 64 dem Empfangsspeicher 68 zugeführt. Wenn sich der Schalter 72 in einer derartigen Position befindet, daß die Signalleitung 66 mit dem Ausgang ToExR1 verbunden ist, werden die aufgenommenen Telegrammdaten gleichzeitig dem Eingang FromExR zugeführt und sodann vom Protokollchip 58 über den Busanschluß 62 an einen nachfolgenden Busteilnehmer, hier die sichere Signaleinheit 18, übertragen. In diesem Fall werden die im Bustelegramm enthaltenen Daten einerseits in den Empfangsspeicher 68 geladen und andererseits unverändert durch den Protokollchip 58 hindurchgeschleust. Im Unterschied dazu werden in dem Fall, daß der Schalter 72 den Eingang FromExR mit dem Sendespeicher 70 verbindet, vom Protokollchip 58 Telegrammdaten an eine nachfolgende Einheit übertragen, die dem Sendespeicher 70 entnommen sind. Durch Umschalten des Schalters 72 ist es somit möglich, die in einem Bustelegramm enthaltenen Daten wahlweise und gezielt durch solche aus dem Sendespeicher 70 zu ersetzen. Dies kann gezielt bis auf die Bitebene erfolgen.

Der in Fig. 3 dargestellte Empfangsbaustein 40 der ersten Steuereinheit 14 basiert auf dem gleichen Slave-Protokollchip (SUPI) wie der Kommunikationsbaustein 38. Zur Unterscheidung ist der Protokollchip in diesem Fall mit der Bezugsziffer 74 bezeichnet. Als Empfangsbaustein ist der Protokollchip 74 über seinen Ausgang ToExR1 allein mit einem Empfangsspeicher 76 verbunden.

Über den Kommunikationsbaustein 38 ist die erste Steuereinheit 14 somit in der Lage, vom Busmaster 36 über den Feldbus 12 übertragene Bustelegramme aufzunehmen und wahlweise gezielt modifiziert an die nachfolgenden Signaleinheiten 18 bis 24 weiterzugeben, Über den Empfangsbaustein 40 ist die erste Steuereinheit 14 darüber hinaus in der Lage, die von den Signaleinheiten 18 bis 24 zurückgesendeten Bustelegramme zu empfangen und mitzuprotokollieren.

Die erste Steuereinheit 14 ist somit in der Lage, auch ohne eine Busmasterfunktionalität mit den Signaleinheiten 18 bis 24 über den Feldbus 12 zu kommunizieren. Über die sicherheitsbezogenen Einrichtungen 42, 52 kann dadurch eine fehlersichere, von der zweiten Steuereinheit 16 unabhängige Datenkommunikation und Steuerung erreicht werden.

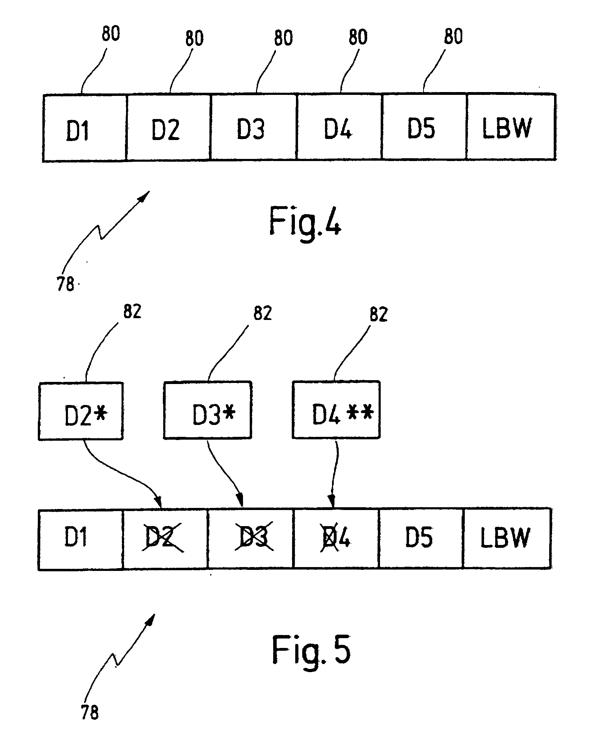

In Fig. 4 ist ein schematisch dargestelltes Bustelegramm, wie es beim Interbus verwendet wird, in seiner Gesamtheit mit der Bezugsziffer 78 bezeichnet. Das Bustelegramm 78 besitzt einen exakt definierten Aufbau, der sich in einzelne Abschnitte unterteilt. Jedes Bustelegramm beginnt mit einem Startwort, das üblicherweise als Loop Back Word (LBW) bezeichnet wird. An dieses Startwort schließen sich einzelne Datenrahmen 80 an, in denen Nutzdaten, wie Steuerbefehle oder Meßsignalwerte, transportiert werden können.

Beim Interbus erzeugt der Busmaster 36, wie bereits erwähnt, ein Bustelegramm 78 und überträgt dieses seriell an den ihm nachgeschalteten Kommunikationsbaustein 38. Dieser empfängt das Bustelegramm 78 und legt die für die erste Steuereinheit 14 relevanten Daten aus den Datenrahmen 80 im Empfangsspeicher 68 ab. Gleichzeitig überträgt er das Bustelegramm 78 an den ihm nachgeordneten Protokollchip 50 der Signaleinheit 18, wobei er wahlweise in dem Datenrahmen enthaltene Daten durch solche aus dem Sendespeicher 70 ersetzen kann. Vom Protokollchip 50 der Signaleinheit 18 wird das Bustelegramm 78 sodann zur Signaleinheit 20 und von dieser zur Signaleinheit 22 und 24 weitergeleitet. Am Ende der Signalkette schickt die zuletzt angeschlossene Signaleinheit 24 das Bustelegramm 78 wieder zurück zum Busmaster 36, wobei das Bustelegramm 78 wiederum sämtliche Protokollchips 50 sowie den Kommunikationsbaustein 38 durchläuft. Sobald der Busmaster 36 das Startwort LBW empfängt, ist dies ein Signal, daß das Bustelegramm 78 im Feldbus 12 einmal sequentiell umgelaufen ist.

Die erste Steuereinheit 14 kann aufgrund des zuvor beschriebenen Datenverkehrs und aufgrund der in Fig. 2 dargestellten Anordnung des Kommunikationsbausteins 38 mit jeder Signaleinheit 18 bis 24 kommunizieren, sofern ihr die Struktur des Netzwerks bekannt ist. Dies bedeutet, daß die erste Steuereinheit 14 vor allem wissen muß, an welcher Stelle des Feldbusses 12 eine von ihr angesprochene Signaleinheit 18 bis 24 angeordnet ist. Bei dem in Fig. 1 dargestellten Steuerungssystem 10 befinden sich die Signaleinheiten 18, 20, 22, an den Plätzen 2, 3 und 4, wenn man die am Feldbus 12 angeschlossenen Einheiten beginnend beim Busmaster 36 von Null an durchzählt. Um beispielsweise Steuerdaten an die Signaleinheit 20 zu übertragen, muß die erste Steuereinheit 14 dementsprechend die Steuerdaten in dem mit D3 bezeichneten Datenrahmen 80 ablegen. Dies ist in Fig. 5 anhand des Datenrahmens 82 mit modifizierten Daten D3* angedeutet. Die ursprünglich in diesem Datenrahmen enthaltenen Daten D3 werden dabei überschrieben.

Da sowohl die erste Steuereinheit 14 als auch die Signaleinheit 20 sicherheitsbezogene Einrichtungen 42, 52 aufweisen, ist es möglich, eine fehlersichere Datenkommunikation zwischen ihnen aufzubauen, ohne daß eine dieser Einheiten eine Busmasterfunktionalität besitzen muß. Gleiches gilt für die Kommunikation der ersten Steuereinheit 14 mit den Signaleinheiten 18 und 22, wobei es bei der Kommunikation mit der Signaleinheit 22 in der Regel genügt, die mit D4 bezeichneten Daten nur teilweise durch modifizierte Daten D4** zu ersetzen. Die für den nicht-sicheren Standardteil der Signaleinheit 22 bestimmten Daten werden durch die erste Steuereinheit 14 nicht verändert.

Nachfolgend ist eine Tabelle dargestellt, anhand der sich die Kommunikation über den Feldbus 12 nochmals nachvollziehen läßt:

| Schritt | Steuereinheit 16 | Steuereinheit 14 | | Signaleinheit 18 | Signaleinheit 20 | Signaleinheit 22 | Signaleinheit 24 | Steuereinheit 16 |
|---|---|---|---|---|---|---|---|---|
| | AUS | EIN | AUS | EIN/AUS | EIN/AUS | EIN/AUS | EIN/AUS | EIN |
| 0 | LBW | | ED1 | E*D2 | E*D3 | E*D4 + ED4 | ED5 | |
| 1 | AD5 | LBW | LBW | ED1 | E*D2 | E*D3 | E*D4 + ED4 | ED5 |
| 2 | AD4 | AD5 | AD5 | LBW | ED1 | E*D2 | E*D3 | E*D4 + ED4 |
| 3 | AD3 | AD4 | A*D4 + AD4 | AD5 | LBW | ED1 | E*D2 | E*D3 |
| 4 | AD2 | AD3 | A*D3 | A*D4 + AD4 | AD5 | LBW | ED1 | E*D2 |
| 5 | AD1 | AD2 | A*D2 | A*D3 | A*D4 + AD4 | AD5 | LBW | ED1 |
| 6 | | AD1 | AD1 | A*D2 | A*D3 | A*D4 + AD4 | AD5 | LBW |

In jeder Zeile der Tabelle sind die Daten an den Ein- und Ausgangsschieberegistern der einzelnen an den Feldbus 12 angeschlossenen Einheiten nach jeweils einem vollständigen Schiebeschritt angegeben. Dabei bedeuten:
- EDx:: Eingangsdaten im Datenrahmen Dx
- ADx:: Ausgangsdaten im Datenrahmen Dx
- E*Dx:: Modifizerte (sichere) Eingangsdaten im Datenrahmen Dx und
- A*Dx:: Modifizierte (sichere) Ausgangsdaten im Datenrahmen Dx.

Im Datenrahmen D4 werden nur die für den sicheren Anteil der Signaleinheit 22 bestimmten Daten von der ersten Steuereinheit 14 modifiziert. Die für den nicht-sicheren Standardteil der Signaleinheit 22 bestimmten Daten bleiben unverändert, so daß dieser Teil der Signaleinheit 22 von der zweiten Steuereinheit 16 angesprochen wird.

Unabhängig von dem hier vorliegend beschriebenen Steuerungssystem zum Steuern von sicherheitskritischen automatisierten Prozessen kann eine derartige Modifikation von Daten in einzelnen Datenrahmen 80, 82 bei einem Feldbus 12 mit sequentiell umlaufenden Telegrammverkehr auch generell dazu verwendet werden, eine Slave-to-Slave-Kommunikation zwischen Busteilnehmern bereitzustellen, von denen keiner eine Busmasterfunktionalität besitzt. Voraussetzung ist hierzu allein, daß der Protokollchip 58 eines Busteilnehmers, der Daten an andere Busteilnehmer versenden will, in der in Fig. 2 dargestellten Art und Weise um einen Sendespeicher 70 und gegebenenfalls einen Empfangsspeicher 68 ergänzt wird. Außerdem benötigt der zum Senden berechtigte Busteilnehmer eine Information darüber, an welcher Stelle im Feldbus 12 sein Adressat angeordnet ist, um dementsprechend den richtigen Datenrahmen 80 zu modifizieren.

Auf diese Weise ist es grundsätzlich auch möglich, mehrere Standard-Steuereinheiten, die mit einem Kommunikationsbaustein 38, 40 versehen sind, in das Feldbussystem einzubringen, um dadurch die Steuerungsaufgabe für nicht-sicherheitskritische Anwendungen auf mehrere Standard-Steuereinheiten zu verteilen.

## Patentansprüche

1. Steuerungssystem zum Steuern von sicherheitskritischen Prozessen (28, 30), mit einer ersten Steuereinheit (14; 14, 54) zum Steuern eines sicherheitskritischen Prozesses (28, 30), mit einer Signaleinheit (18, 20, 22, 24; 18, 20, 22, 24, 56), die über E/A-Kanäle (32) mit dem sicherheitskritischen Prozeß (28, 30) verknüpft ist, ferner mit einem Feldbus (12), über den die erste Steuereinheit (14; 14, 54) und die Signaleinheit (18, 20, 22, 24; 18, 20, 22, 24, 56) verbunden sind, und mit einem Busmaster (36) zum Steuern der Kommunikation auf dem Feldbus (12), wobei die erste Steuereinheit (14; 14, 54) und die Signaleinheit (18, 20, 22, 24; 18, 20, 22, 24, 56) jeweils sicherheitsbezogene Einrichtungen (42, 52) aufweisen, um eine fehlersichere Kommunikation miteinander zu gewährleisten, wobei die sicherheitsbezogenen Einrichtungen (42, 52) jeweils eine mehrkanalige Struktur (44) aufweisen, gekennzeichnet durch eine zweite Steuereinheit (16) zum Steuern von sicherheitsunkritischen Prozessen (26), wobei der Busmaster (36) getrennt von der ersten Steuereinheit (14; 14, 54) und der Signaleinheit (18, 20, 22, 24; 18, 20, 22, 24, 56) an den Feldbus (12) angeschlossen ist, und wobei die erste Steuereinheit (14; 14, 54) ein eigenständiges Steuerprogramm (48) zum Steuern des sicherheitskritischen Prozesses (28, 30) aufweist, das die erste Steuereinheit (14; 14, 54) in die Lage versetzt, den sicherheitskritisehen Prozeß (28, 30) unabhangig von anderen Steuereinheiten (16, 54) zu steuern.

2. Steuerungssystem nach Anspruch 1, **dadurch gekennzeichnet, daß** die erste Steuereinheit (14; 14, 54) geeignet ist, ein fehlersicheres Bustelegramm (78) zu erzeugen, bei dessen Empfang die Signaleinheit (18, 20, 22; 18, 20, 22, 56) den sicherheitskritischen Prozeß (28, 30) in einen sicheren Zustand überführt.

3. Steuerungssystem nach Anspruch 1 oder 2, **dadurch gekennzeichnet, daß** die mehrkanalige Struktur (44) diversitär ist.

4. Steuerungssystem nach einem der Ansprüche 1 bis 3, **dadurch gekennzeichnet, daß** die zweite Steuereinheit (16) getrennt von der ersten Steuereinheit (14; 14, 54) an den Feldbus (12) angeschlossen ist.

5. Steuerungssystem nach einem der Ansprüche 1 bis 4, **dadurch gekennzeichnet, daß** die zweite Steuereinheit (16) frei von sicherheitsbezogenen Einrichtungen (42, 52) ist.

6. Steuerungssystem nach einem der Ansprüche 1 bis 5, **dadurch gekennzeichnet, daß** die zweite Steuereinheit (16) den Busmaster (36) beinhaltet.

7. Steuerungssystem nach einem der Ansprüche 1 bis 6, **dadurch gekennzeichnet, daß** der Feldbus (12) einen umlaufenden Telegrammverkehr zwischen einzelnen an den Feldbus (12) angeschlossenen Einheiten (14 - 24) bereitstellt.

8. Steuerungssystem nach Anspruch 7, **dadurch gekennzeichnet, daß** der Feldbus (12) ein Interbus ist.

9. Steuerungssystem nach Anspruch 7 oder 8, **dadurch gekennzeichnet, daß** die erste Steuereinheit (14; 14, 54) bezogen auf eine Umlaufrichtung des Telegrammverkehrs vor der Signaleinheit (18, 20, 22, 24; 18, 20, 22, 24, 56) angeordnet ist.

10. Steuerungssystem nach Anspruch 9, **dadurch gekennzeichnet, daß** die erste Steuereinheit (14; 14, 54) Mittel (70, 72) aufweist, um Telegrammdaten (80), die an die Signaleinheit (18, 20, 22, 24; 18, 20, 22, 24, 56) adressiert sind, durch fehlersichere Telegrammdaten (82) zu ersetzen.

11. Steuerungssystem nach einem der Ansprüche 1 bis 10, **dadurch gekennzeichnet, daß** es zumindest zwei erste Steuereinheiten (14, 54) zum Steuern von zumindest zwei sicherheitskritischen Prozessen (28, 30) aufweist.

## Claims

1. Control system for controlling safety-critical processes (28, 30), comprising a first control unit (14; 14, 54) for controlling a safety-critical process (28, 30), comprising a signal unit (18, 20, 22, 24; 18, 20, 22, 24, 56) linked to the safety-critical process (28, 30) via I/O channels (32), further comprising a field bus (12) via which the first control unit (14; 14, 54) and the signal unit (18, 20, 22, 24; 18, 20, 22, 24, 56) are connected, and comprising a bus master (36) for controlling communication on the field bus (12), with the first control unit (14; 14, 54) and the signal unit (18, 20, 22, 24; 18, 20, 22; 24, 56) each comprising safety-directed systems (42, 52) for ensuring failsafe communication between each other, with the safety-directed systems (42, 52) each comprising a multi-channel structure (44), **characterized by** a second control unit (16) for controlling non-safety-critical processes (26), wherein the bus master (36) is connected to the field bus (12) separately from the first control unit (14; 14, 54) and from the signal unit (18, 20, 22, 24; 18, 20, 22, 24, 56), and wherein the first control unit (14; 14, 54) comprises an independent control program (48) for controlling the safety-critical process (28, 30), which enables the first control unit (14; 14, 54) to control the safety-critical process (28, 30) independently from other control units (16, 54).

2. The control system of Claim 1, **characterized in that** the first control unit (14; 14, 54) is capable of generating a failsafe bus telegram (78) the receipt of which causes the signal unit (18, 20, 22; 18, 20, 22, 56) to transfer the safety-critical process (28, 30) to a safe state.

3. The control system of Claim 1 or 2, **characterized in that** the multi-channel structure (44) is based on the diversity principle.

4. The control system of one of Claims 1 to 3, **characterized in that** the second control unit (16) is connected to the field bus (12) separately from the first control unit (14; 14,54).

5. The control system of one of Claims 1 to 4, **characterized in that** the second control unit (16) is free from safety-directed systems (42, 52).

6. The control system of one of Claims 1 to 5, **characterized in that** the second control unit (16) comprises the bus master (36).

7. The control system of one of Claims 1 to 6, **characterized in that** the field bus (12) provides circulating telegram traffic between different units (14 - 24) connected to the field bus (12).

8. The control system of Claim 7, **characterized in that** the field bus (12) is an Interbus.

9. The control system of Claim 7 or 8, **characterized in that** the first control unit (14; 14, 54) is arranged upstream of the signal unit (18, 20, 22, 24; 18, 20, 22, 24, 56), relative to a circulating direction of the telegram traffic.

10. The control system of Claim 9, **characterized in that** the first control unit (14; 14, 54) comprises means (70, 72) for replacing any telegram data (80), addressed to the signal unit (18, 20, 22, 24; 18, 20, 22, 24, 56), by failsafe telegram data (82).

11. The control system of one of Claims 1 to 10, **characterized in that** the control system comprises at least two first control units (14, 54) for controlling at least two safety-critical processes (28, 30).

## Revendications

1. Système de commande destiné à commander des processus critiques pour la sécurité (28, 30), pourvu d'une première unité de commande (14; 14, 54) destinée à commander un processus critique pour la sécurité (28, 30), d'une unité de signal (18, 20, 22, 24; 18, 20, 22, 24, 56), qui est connectée par le biais de canaux d'E/S (32) au processus critique pour la sécurité (28, 30), en plus d'un bus de terrain (12) par le biais duquel sont reliées la première unité de commande (14; 14, 54) et l'unité de signal (18, 20, 22, 24; 18, 20, 22, 24, 56), et d'un maître de bus (36) destiné à commander la communication sur le bus de terrain (12), la première unité de commande (14; 14, 54) et l'unité de signal (18, 20, 22, 24; 18, 20, 22, 24, 56) comprenant chacune des dispositifs liés à la sécurité (42, 52) afin d'assurer entre eux une communication protégée contre les erreurs, les dispositifs liés à la sécurité (42, 52) comprenant chacun une structure à plusieurs canaux (44), **caractérisé par** une seconde unité de commande (16) destinée à commander des processus non critiques pour la sécurité (26), le maître de bus (36), séparé de la première unité de commande (14; 14, 54) et de l'unité de signal (18, 20, 22, 24; 18, 20, 22, 24, 56) étant raccordé au bus de terrain (12), et la première unité de commande (14; 14, 54) comprenant un programme de commande autonome (48), destiné à commander le processus critique pour la sécurité (28, 30), qui met la première unité de commande (14; 14, 54) en mesure de commander le processus critique pour la sécurité (28, 30) indépendamment des autres unités de commande (16, 54).

2. Système de commande selon la revendication 1, **caractérisé en ce que** la première unité de commande (14; 14, 54) est appropriée pour générer un télégramme de bus protégé contre les erreurs (78) à la réception duquel l'unité de signal (18, 20, 22; 18, 20, 22, 56) met le processus critique pour la sécurité (28, 30) dans un état sûr.

3. Système de commande selon la revendication 1 ou 2, **caractérisé en ce que** la structure à plusieurs canaux (44) est diversifiée.

4. Système de commande selon l'une quelconque des revendications 1 à 3, **caractérisé en ce que** la seconde unité de commande (16) séparée de la première unité de commande (14; 14, 54) est raccordée au bus de terrain (12).

5. Système de commande selon l'une quelconque des revendications 1 à 4, **caractérisé en ce que** la seconde unité de commande (16) est exempte de dispositifs liés à la sécurité (42, 52).

6. Système de commande selon l'une quelconque des revendications 1 à 5, **caractérisé en ce que** la seconde unité de commande (16) contient le maître de bus (36).

7. Système de commande selon l'une quelconque des revendications 1 à 6, **caractérisé en ce que** le bus de terrain (12) fournit un trafic de télégrammes circulaire entre différentes unités (14 - 24) raccordées au bus de terrain (12).

8. Système de commande selon la revendication 7, **caractérisé en ce que** le bus de terrain (12) est un Interbus.

9. Système de commande selon la revendication 7 ou 8, **caractérisé en ce que** la première unité de commande (14; 14, 54), est disposée relativement à un sens de circulation du trafic de télégramme devant l'unité de signal (18, 20, 22, 24; 18, 20, 22, 24, 56).

10. Système de commande selon la revendication 9, **caractérisé en ce que** la première unité de commande (14; 14, 54) comprend des moyens (70, 72) pour remplacer des données de télégramme (80), qui sont adressées à l'unité de signal (18, 20, 22, 24; 18, 20, 22, 24, 56), par des données de télégramme protégées contre les erreurs (82).

11. Système de commande selon l'une quelconque des revendications 1 à 10, **caractérisé en ce qu'**il comprend au moins deux premières unités de commande (14, 54) destinées à la commande d'au moins deux processus critiques pour la sécurité (28, 30).
